# EUROPEAN PATENT SPECIFICATION

(11) **EP 2 002 033 B1**
(45) Date of publication and mention of the grant of the patent: **01.11.2017**
(21) Application number: 06835700.3
(22) Date of filing: 24.11.2006
(51) Int. Cl.: C25B 9/12, C25B 1/04, C25B 1/12, C25B 9/00

(54) **A DEVICE FOR PRODUCTION OF HYDROGEN BY ELECTROLYSIS**
VORRICHTUNG ZUR PRODUKTION VON WASSERSTOFF DURCH ELEKTROLYSE
DISPOSITIF POUR LA PRODUCTION D'HYDROGÈNE PAR ÉLECTROLYSE

(30) Priority: 25.11.2005 NO 20055593
(43) Date of publication of application: 17.12.2008
(73) Proprietor: RotoBoost AS, 3117 Tønsberg (NO)
(72) Inventor: Skomsvold, Åge Jørgen, 3117 Tønsberg (NO)
(74) Representative: Oslo Patentkontor AS
(86) International application number: PCT/NO2006/000432
(87) International publication number: WO 2007/061319

(56) References cited:
- WO-A1-2004/072328
- DE-A1- 2 819 740
- GB-A- 1 399 898
- US-A- 4 581 105
- PATENT ABSTRACTS OF JAPAN & JP 56 096 084 A (TSUJI NOBUYOSHI) 03 August 1981
- PATENT ABSTRACTS OF JAPAN & JP 2003 088866 A (SHIODA HIROICHI) 25 March 2003

## Description

### Field of the Invention

The present invention relates to the production of hydrogen.

### Technical Background

Hydrogen has been predicted a great future in energy management, among other in the car industry.

Hydrogen may be produced by many methods. Currently, most hydrogen is produced by steam reforming of natural gas. However, C02 is produced as a byproduct, making this production method less environment friendly.

Another option is by direct electrolysis of water. This produces a very clean product, if the primary production of the electricity is disregarded. Conventional water electrolysers have been in commercial use for at least 80 years, but currently produce only some few percent of the worlds hydrogen demand. Water electrolysis will probably find applications in countries where electricity is available cheap from large hydro power plants, or for the control of energy from nuclear power plants, where excess energy may be available at night.

The classical method of water electrolysis consists of the submersion of a positive (anode) and negative (cathode) electrode in a vat with an aqueous alkaline electrolyte (lye) . Hydrogen is produced at the cathode and oxygen at the anode. The gases are separated by an ion conducting diaphragm. The hydrogen are collected, purified (for electrolyte vapour, oxygen and water), and pressurized before being delivered to the customer. Modern electrolysers can reach efficiencies of around 65%. One source of loss is the wandering of ions though the electrolyte. Another drawback limiting the energy throughput of an electrolysis cell is that the gases formed at the electrodes dilute the electrolyte, i.e. the gases prevent sufficient electrolyte to reach the electrodes. To countermeasure this effect, the electrodes must be made with large surfaces.

Currently, GHW in Germany tries to develop a process for high pressure water electrolysis, at pressures up to 5 MPa. They aim to develop a process with an improved operating efficiency during strongly varying loads, e.g. from wind power stations. Due to the high pressure, the gas produced at the electrodes will be compressed into smaller bubbles, which ease the flow of electrolyte to the electrodes. The boiling point is also heightened, why less steam is produced. However, the pressure is still low compared with the storage pressure of the hydrogen gas that normally is at 20-70 MPa.

Other has tried to develop processes for electrolysis at higher temperatures. The idea is to obtain part of the energy required for water separation from heat.

From Japanese publication JP56096084 there is known a device for producing hydrogen and oxygen. Said device includes a rotary electrolysis chamber with radial electrodes. Rotating the chamber is advantageous, as this will rapidly separate the gases from the electrolyte. However, when rotating, the electrolyte will become displaced tangentially in the chamber between the radial electrodes decreasing the effective electrolysis area. Further, the radial construction has structural weaknesses preventing high rotational speeds. The electrolysis is adapted to be performed at a low bath voltage, and may not deliver gases at higher pressures than in the supplied electrolyte.

### Summary of the Invention

The present invention provides a device for producing hydrogen from water by electrolysis, and at a high pressure.

The inventive device is compact and efficient, and has a high production rate.

The advantages of the invention are due to the electrolysis being performed under high G conditions, i.e. in a combined electrolysis cell and rotary separator device. The high G means that the gas bubbles produced by the electrolysis will be small and hastily become separated from the electrolyte. Thus, sufficient electrolyte will surround the electrodes at any time, why the device may be designed with small electrodes but still produce gases at a high throughput. Any steam produced has much higher density than the gases and separate easily, i.e. very little or no steam will remain in the gases. The device may deliver the gases at normal storage pressure.

The scope of the invention is defined in the appended claims. In particular the invention includes a device for producing hydrogen and oxygen by electrolysis, including a disc structure including an electrolysis chamber at the periphery of the disc structure, first and second electrodes in said electrolysis chamber, means for supplying DC electric power to said electrodes, and drive means for rotating said disc structure, wherein said first and second electrodes are parallel and arranged tangentially along the periphery of said disc structure.

### Brief Description of the Drawings

The invention will now be described in detail in reference to the appended drawings, in which:
Fig. 1 is a longitudinal section through one embodiment of the invention,
Fig. 2 is a cross section through the embodiment shown in Fig. 1,
Fig. 3 is a longitudinal section through another embodiment of the invention.

### Detailed Description

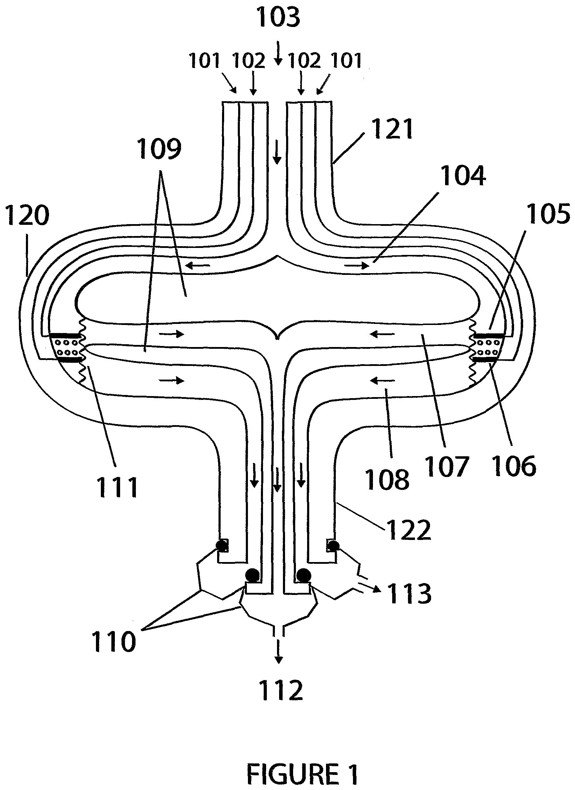

Fig. 1 shows the principal parts of the invention, namely a cylindrical drum or disc-like structure 120 with hollow o shafts 121, 122. The shafts 121, 122 are suspended in bearings and connected with drive means arranged to rotate the disc 120 (not shown). The structure includes an input channel 103, in which electrolyte or water is supplied to the electrolysis. The input channel is placed in the centre s of the shaft 121, and branches out in a sink channel 104. The fluid will be thrown outwards in the sink channel 104 due to centrifugal forces. The sink channel 104 may be realized as a flat disk-like chamber, possible with vanes, or as tubes or hollow spokes leading from the centre part o of the disc to the periphery. In the embodiment shown in the figure, the vanes will also act as support elements binding the structure together. At the periphery, the fluid will contact electrodes 105, 106 in an electrolysis chamber, which are cathode 105 and anode 106, respectively. 5 The sink channel or channels 104 may also be designed as a spiral to benefit from the resultant force from tangential and centripetal accelerations acting on the fluid in the channel (s).

The electrodes are shaped like annular plates and may o advantageously be perforated or porous to ease flow of electrolyte around and between the electrodes, and provide a large surface area. The electrolyte will also flow tangentially along the electrodes. This is also advantageous as it will "brush off" the gas bubbles and thus provide a good contact between the electrolyte and electrodes. The electrodes are connected to electrical conductors 101, 102 leading to slip rings on the shaft 121, and further to a supply of DC electric power (not shown). The produced gases are removed through hydrogen channel 107 and oxygen channel 108. The hydrogen channel 107 (which may be a disk-like chamber with radial walls from just above the electrodes or a plurality of tubes or hollow spokes, optionally of spiral form, similar to the input channel 104) is connected to a hydrogen output channel in the centre of the shaft 122, and further with a hydrogen collection chamber at the end of the shaft 122. The collection chambers 110 are stationary and connected to the shaft with seal rings. Thus, hydrogen is delivered via the hydrogen outlet tube 112. Correspondingly, oxygen is delivered through oxygen riser channel 108, an oxygen output channel and an oxygen collection chamber leading to oxygen outlet tube 113.

Under the high pressure prevailing at the periphery of the disc, the size of the gas bubbles developing at the electrodes becomes very small, and very easily leaves the electrodes. The rotation of the disc will increase the G field at the periphery of the disc. Thus, the gravity force differences between gases and electrolyte will rise, meaning that the gases will develop a large buoyant force. The gases will rapidly become separated from the electrolyte, which means that more of the electrolyte will be in contact with the electrodes compared with prior art static electrolysis chambers. This means that the electrolysis will go on effectively even with the small electrodes and the small volume of the electrolysis chamber in the inventive device. The pressures in the gases are determined by valves at the outlet pipes (not shown). By proper regulation of the valves, gases may be delivered at high pressures. If the unit is mounted vertically, the pressure in the channels may be regulated to allow the unit to "float" on the bearings lowering friction.

The invention may be operated with DC voltages just barely exceeding the voltages necessary to start and maintain the electrolysis. Then, hydrogen will be produced in a limited area surrounding the cathode, and oxygen will be produced at the anode. The produced gases will rise into each outlet channel and very little of the "wrong" gas will appear in each channel. To achieve an improved separation of gases, an ion membrane may be provided between the electrodes. The membrane may be produced from a polymer (PEM) or an ion conducting ceramic for high pressure and temperature applications.

However, the invention may also be operated with supercritical pressures/temperatures prevailing in the electrolysis chamber. Supercritical conditions will exist at pressures above 222 bar and temperatures above 374 <0>C.

During supercritical conditions, the voltage on the electrodes may be increased ("over voltage") from the minimum condition described above. The voltage may be increases until arcing occurs, and this condition is maintained. Increased voltage means increased production rate, but in prior art electrolysis plants steam is produced due to the arcing. Under supercritical conditions, this is of no consequence as the steam will behave as a liquid. The supercritical water has higher density than the gases, and will remain at the electrodes. Thus, supercritical conditions are very beneficial for the electrolysis.

Heat produced in the electrolysis chamber from the arcing may be transferred to the electrolyte in the input channel 103 using a heat exchanger, effectively regaining the spent energy. An alternative to using over voltage electrolysis is to supply additional energy (heat) to the electrolysis chamber from an external source, and operate the electrolysis cell at lower voltages.

On the other hand, if the structure must be operated at a lower temperature, e.g. due to the use of materials that cannot stand high temperatures, heat may be removed by supplying more electrolyte or water than is consumed in the electrolysis process. Excess electrolyte/water must then be removed from an auxiliary channel (not shown).

Additives containing hydrogen, such as hydrocarbons, may be added to the electrolyte, either in the input channel 103 or directly in the electrolysis chamber. The electrolyte and additives will be split into hydrogen, other gases and hydrocarbon rests. The hydrogen will <A>float" on the other constituents in the hydrogen channel 107. The pressures in the hydrogen and oxygen channels may be controlled by valves at the outlets so the electrolyte/hydrocarbon level in the hydrogen channel is kept level with the periphery of the partition wall separating said channels, while the electrolyte/hydrocarbon level in the oxygen channel is allowed to rise a bit into the channel. Then, the other gases and hydrocarbon rests will "bubble" over to the oxygen channel. In such an embodiment, the electrodes may be covered with or entirely made of a catalytic material, e.g. a nickel alloy.

The unit may include additional inlet channels (not shown) for supplying [Lambda] other additives to the electrolysis chamber, said additives lowering the energy needed for the electrolysis, thus acting as catalysts. The additives in question may be iodides or bromides, or mixtures of the same or similar chemicals.

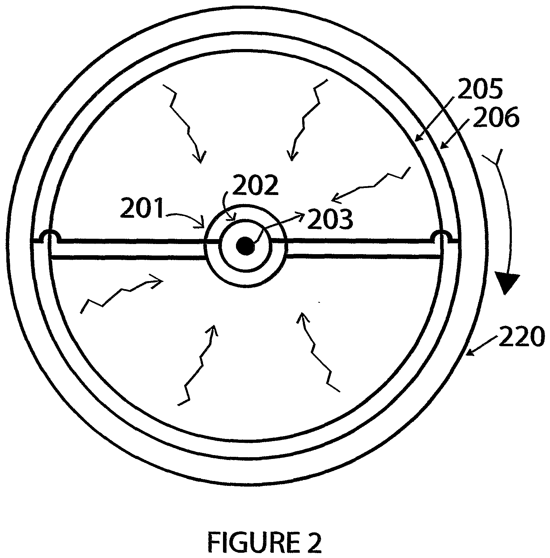

Fig. 2 shows a cross section through the disc structure of Fig. 1, in the area of the electrodes. Electrolyte or water is entering the device through the input channel 203 at the centre and forced out towards the periphery where it will contact the annular hydrogen and oxygen electrodes 205, 206. The gases will flow the opposite way due to the differences in density.

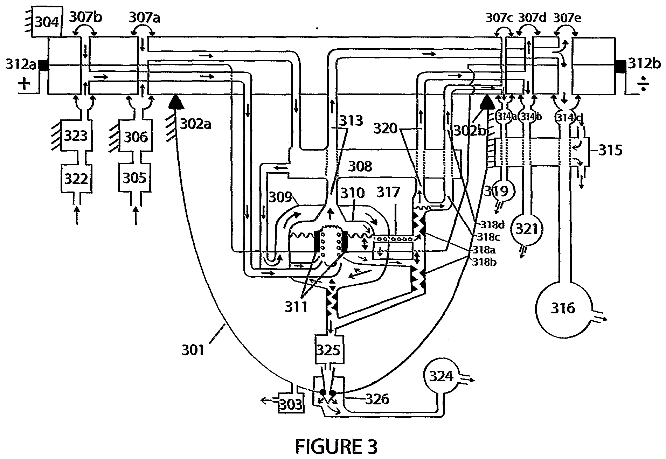

Fig. 3 shows another embodiment of the invention, in which the electrolysis process is supplemented with hydrocarbon reforming. Only the axis and one half of the disc structure is shown; the other half is a mirror image of the half structure shown.

The rotating hydrogen producing unit is encapsulated in a evacuated housing 301 with bearings 302a, 302b for the shaft of the unit. The unit is rotated by means of a motor 304. Vacuum is established inside the housing 301 by a vacuum pump 303. The vacuum prevents air resistance or drag acting on the rotating unit, and will isolate the unit as to heat loss and noise.

When the rotation has started, water/electrolyte is pumped in by the high pressure pump 305, whereupon the water/electrolyte is pumped through the preheat chamber 306 (which is used at start up to rapidly establish the working temperature) to a slip chamber 307a. The slip chamber 307a surrounds and seals around the shaft. The electrolyte/water fluid is transported to a secondary heat exchanger 308 (where hot gases from the electrolysis cell will supply heat to the fluid) and further to a main heat exchanger 309 (which is surrounding the electrolysis cell) and then to the electrolysis cell 310. The electrolyte/water is introduced below the electrodes. This design of the input channel may with advantage also be used in the embodiments shown in Figs. 1 and 2. Each electrode 311 in the electrolysis cell 310 is supplied with DC electric voltage via insulated conductors from contacts 312a, 312b located at each end of the shaft. Hydrogen will flow into hydrogen channel 313, through secondary heat exchanger 308 and into slip chamber 307e. Control valve 314c controls the outlet of hydrogen to another heat exchanger 315 and accumulator 316. Simultaneously, the pressure in the hydrogen channel 313 is controlled, as explained for the first embodiment in Fig. 1. Oxygen is taken off through a corresponding oxygen channel 318a, 318c, 318d via secondary heat exchanger 308, slip chamber 307c, control valve 314a, heat exchanger 315 and accumulator 319. Hydrogen rests in oxygen channel 318 may be separated into a dedicated channel 320 via secondary heat exchanger 308, slip chamber 307d, control valve 314b, heat exchanger 315 and accumulator 321.

Hydrocarbons are added in the line starting with the heat exchanger 322 (where the hydrocarbons are cooled, increasing their density and thus the centrifugal forces acting on the electrolyte) and the pump 323. The heat exchanger 322 is an option, and may in some instances be unnecessary, e.g. if the added hydrocarbons are liquids. The other side of the heat exchanger 322 is supplied with cold gases, i.e. produced gases allowed to expand. The cold hydrocarbon fluid is transported via slip chamber 307b into channels leading to the main heat exchanger 309, whereupon a controlled amount is added to the electrolyte/water in the electrolysis cell 310. Fluid or solid rests with higher density than the electrolyte/water is removed through a density difference controlled valve 325 and flap valves 326 along the rim of the vacuum chamber 301. The rests are then collected in accumulator tank 324. The inner wall of the oxygen chamber may be covered with a sequence of catalysts (nickel, copper, zinc, etc.) acting on hydrocarbon rests following the oxygen into said chamber, and extracting more hydrogen from the hydrocarbon matter. The channels 318a, 318b may also be covered with catalysts for the same purpose.

In the embodiment shown in Fig. 3 no divisional wall is used in separating the gases (as in Fig. 1) . The hydrogen will float on the oxygen. Thus the oxygen is removed from the electrolysis chamber through a horizontal channel located at the side of the chamber.

While the embodiment of the invention illustrated in Fig. 3 separates the produced gases into several channels, the device may be equipped with more channels allowing each gas component to be separated into separate channels, e.g. hydrogen, oxygen, carbon monoxide and carbon dioxide channels. The device may also be supplemented with an outer cooling mantle with corresponding inlet, rise, sink and outlet channels, and a control valve at the outlet (not shown) . Air will be taken in through the inlet channel and heated when it passes by the electrolysis chamber. Due to the gravity difference between the cold and heated air, the air will become pressurized, depending on the setting of the control valve. Thus, this arrangement may then act as a compressor.

Instead of using catalytic layers in the channels, catalytic particles, such as nanoparticles, may be added to the electrolyte. Other catalytic particles may also be added in order to improve the efficiency of the device. Calcium oxide particles with CO₂ absorbing properties may also be added.

The disc structure may be produced from any material with the required strength to withstand the forces imposed when rotating at high speed. The structure should be light in weight to limit said forces. The structure may be designed in a metal, with the electrodes insulated from the rest of the structure, or from a ceramic or composite material. The centrifugal forces are determined by the rotation speed and the diameter of the disc unit, which must be adapted to the forces allowed by the materials used.

In case the structure is made from an insulating material, an external electromagnetic source maybe used to heat the electrolyte. A suitable electromagnetic source may be a magnetron. An alternative is to mount a number of magnets on the inside of the outer housing (which is static in relation to the rotating disc structure), which will introduce an eddy current in a conducting disc structure.

In order to limit the rotation speed and the stresses placed on the disc structure, the rotating unit described so far may be preceded by a pump unit delivering pressurized water/electrolyte. Thus, the electrolysis unit may be operated at a lower rotational speed meaning lower centrifugal forces acting on the disc structure.

To avoid the electrodes becoming deteriorated from crystallization (when supplying the electrodes with DC), the polarity of the electrodes should be changed at intervals; even though this means that the gas outlet channels must be interchanged. Note that in the embodiment shown in Fig. 3, it is unnecessary to switch outlet channels.

The figures must be seen as schematic drawings illustrating the principles of the invention only, and not necessarily showing real world physical realizations of the invention. The invention may be realized using many different materials and arrangements of its components. Such realizations should be within the abilities of any person skilled in the art.
accumulator 316. Simultaneously, the pressure in the hydrogen channel 313 is controlled, as explained for the first embodiment in Fig. 1. Oxygen is taken off through a corresponding oxygen channel 318a, 318c, 318d via secondary heat exchanger 308, slip chamber 307c, control valve 314a, heat exchanger 315 and accumulator 319. Hydrogen rests in oxygen channel 318 may be separated into a dedicated channel 320 via secondary heat exchanger 308, slip chamber 307d, control valve 314b, heat exchanger 315 and accumulator 321.

Hydrocarbons are added in the line starting with the heat exchanger 322 (where the hydrocarbons are cooled, increasing their density and thus the centrifugal forces acting on the electrolyte) and the pump 323. The heat exchanger 322 is an option, and may in some instances be unnecessary, e.g. if the added hydrocarbons are liquids. The other side of the heat exchanger 322 is supplied with cold gases, i.e. produced gases allowed to expand. The cold hydrocarbon fluid is transported via slip chamber 307b into channels leading to the main heat exchanger 309, whereupon a controlled amount is added to the electrolyte/water in the electrolysis cell 310. Fluid or solid rests with higher density than the electrolyte/water is removed through a density difference controlled valve 325 and flap valves 326 along the rim of the vacuum chamber 301. The rests are then collected in accumulator tank 324. The inner wall of the oxygen chamber may be covered with a sequence of catalysts (nickel, copper, zinc, etc.) acting on hydrocarbon rests following the oxygen into said chamber, and extracting more hydrogen from the hydrocarbon matter. The channels 318a, 318b may also be covered with catalysts for the same purpose.

In the embodiment shown in Fig. 3 no divisional wall is used in separating the gases (as in Fig. 1). The hydrogen will float on the oxygen. Thus the oxygen is removed from the electrolysis chamber through a horizontal channel located at the side of the chamber.

While the embodiment of the invention illustrated in Fig. 3 separates the produced gases into several channels, the device may be equipped with more channels allowing each gas component to be separated into separate channels, e.g. hydrogen, oxygen, carbon monoxide and carbon dioxide channels. The device may also be supplemented with an outer cooling mantle with corresponding inlet, rise, sink and outlet channels, and a control valve at the outlet (not shown). Air will be taken in through the inlet channel and heated when it passes by the electrolysis chamber. Due to the gravity difference between the cold and heated air, the air will become pressurized, depending on the setting of the control valve. Thus, this arrangement may then act as a compressor.

Instead of using catalytic layers in the channels, catalytic particles, such as nanoparticles, may be added to the electrolyte. Other catalytic particles may also be added in order to improve the efficiency of the device. Calcium oxide particles with CO₂ absorbing properties may also be added.

The disc structure may be produced from any material with the required strength to withstand the forces imposed when rotating at high speed. The structure should be light in weight to limit said forces. The structure may be designed in a metal, with the electrodes insulated from the rest of the structure, or from a ceramic or composite material. The centrifugal forces are determined by the rotation speed and the diameter of the disc unit, which must be adapted to the forces allowed by the materials used.

In case the structure is made from an insulating material, an external electromagnetic source may be used to heat the electrolyte. A suitable electromagnetic source may be a magnetron. An alternative is to mount a number of magnets on the inside of the outer housing (which is static in relation to the rotating disc structure), which will introduce an eddy current in a conducting disc structure.

In order to limit the rotation speed and the stresses placed on the disc structure, the rotating unit described so far may be preceded by a pump unit delivering pressurized water/electrolyte. Thus, the electrolysis unit may be operated at a lower rotational speed meaning lower centrifugal forces acting on the disc structure.

To avoid the electrodes becoming deteriorated from crystallization (when supplying the electrodes with DC), the polarity of the electrodes should be changed at intervals; even though this means that the gas outlet channels must be interchanged. Note that in the embodiment shown in Fig. 3, it is unnecessary to switch outlet channels.

The figures must be seen as schematic drawings illustrating the principles of the invention only, and not necessarily showing real world physical realizations of the invention. The invention may be realized using many different materials and arrangements of its components. Such realizations should be within the abilities of any person skilled in the art.

## Claims

1. A device for producing hydrogen and oxygen by electrolysis, said device including a disc structure (120) including an electrolysis chamber at the periphery of the disc structure (120), first and second electrodes (105, 106) in said electrolysis chamber, means for supplying DC electric power to said electrodes (105, 106), and drive means for rotating said disc structure (120), **characterized in that** said first and second electrodes (105, 106) are parallel and arranged tangentially along the periphery of said disc structure (120).

2. A device as claimed in claim 1, said device further including a first inlet channel (103) in a shaft supporting s said disc structure, the inlet channel (103) being connected with a disc like channel leading to the electrolysis chamber, said inlet channel (103) supplying water or electrolyte to said electrolysis chamber.

3. A device as claimed in claim 1, said device further o including a first inlet channel (103) in a shaft supporting said disc structure, the inlet channel (103) being branched into tubes going from a central part of the disc structure into the electrolysis chamber at the periphery, said inlet channel (103) supplying water or electrolyte to said electrolysis chamber.

4. A device as claimed in claim 2 or 3 , wherein said first inlet channel is arranged to deliver the electrolyte or water at an outer periphery of the first and second electrodes (105, 106).

5. A device as claimed in claim 1, said device including a second inlet channel arranged to supply hydrocarbons or other chemicals to the electrolysis chamber.

6. A device as claimed in claim 1, said device further including a hydrogen channel (107) adapted to remove hydrogen produced in the electrolysis chamber, the hydrogen channel (107) being connected to a hydrogen outlet channel in the shaft (122) leading to a hydrogen collection chamber (112), a hydrogen outlet valve adapted to control the pressure in the hydrogen gas.

7. A device as claimed in claim 1, said device further including an oxygen channel (108) adapted to remove oxygen o produced in the electrolysis chamber, the oxygen channel (108) being connected to an oxygen outlet channel in the shaft (122) leading to an oxygen collection chamber (113), an oxygen outlet valve adapted to control the pressure in the oxygen gas.

8. A device as claimed in claim 1, said device including a pump adapted to pressurize the water or electrolyte before it is supplied to the disc structure.

9. A device as claimed in claim 1, said device being adapted to operate with supercritical conditions in said electrolysis chamber.

10. A device as claimed in claim 6, said device being adapted to operate with a voltage between the electrodes (105, 106) producing arcing between said electrodes.

11. A device as claimed in claim 2 or 3 , said device 5 including at least one heat exchanger transferring heat from produced gases to the water or electrolyte in the input channel.

12. A device as claimed in claim 7, said device including one or more catalysts in the oxygen channel (108).

13. A device as claimed in claim 12, said device including a succession of catalysts, at least containing nickel, copper and zinc.

14. A device as claimed in claim 1, said device including an evacuated chamber enclosing said disc structure.

15. A device as claimed in claim 3, 6 and 7, wherein said inlet channel (104) and/or hydrogen channel (107) and/or oxygen channel (108) is formed as a spiral.

16. A device as claimed in any of the preceding claims, said device including a membrane located between the electrodes.

17. A device as claimed in claim 16, wherein said membrane is made of a polymer or ceramic material.

## Patentansprüche

1. Vorrichtung zum Produzieren von Wasserstoff und Sauerstoff durch Elektrolyse, die Vorrichtung aufweisend eine Scheibenstruktur (120), die eine Elektrolysekammer an der Peripherie der Scheibenstruktur (120), erste und zweite Elektroden (105, 106) in der Elektrolysekammer, Mittel, die Elektroden (105, 106) mit Gleichstrom zu versorgen und Antriebsmittel zum Drehen der Scheibenstruktur (120) aufweist,
**dadurch gekennzeichnet, dass** die ersten und zweiten Elektroden (105, 106) parallel sind und tangential entlang der Peripherie der Scheibenstruktur (120) angeordnet sind.

2. Vorrichtung nach Anspruch 1, die Vorrichtung weiter aufweisend einen ersten Einlasskanal (103) in einer Welle, die die Scheibenstruktur trägt, wobei der Einlasskanal (103) mit einem scheibenähnlichen Kanal verbunden ist, der zu der Elektrolysekammer führt, wobei der Einlasskanal (103) Wasser oder Elektrolyte zu der Elektrolysekammer transportiert.

3. Vorrichtung nach Anspruch 1, die Vorrichtung weiter aufweisend einen ersten Einlasskanal (103) in einer Welle, die die Scheibenstruktur trägt, wobei der Einlasskanal (103) in Rohre verzweigt ist, die von einem zentralen der Scheibenstruktur in die Elektrolysekammer an der Peripherie führen, wobei der Einlasskanal (103) Wasser oder Elektrolyte zu der Elektrolysekammer transportiert.

4. Vorrichtung nach Anspruch 2 oder 3, wobei der erste Einlasskanal angeordnet ist, um die Elektrolyte oder Wasser an eine äußere Peripherie der ersten und zweiten Elektroden (105, 106) abzugeben.

5. Vorrichtung nach Anspruch 1, die Vorrichtung aufweisend einen zweiten Einlasskanal, der angeordnet ist Kohlenwasserstoffe oder andere Chemikalien zu der Elektrolysekammer zu transportieren.

6. Vorrichtung nach Anspruch 1, die Vorrichtung weiter aufweisend einen Wasserstoffkanal (107), der angepasst ist, um Wasserstoff zu entfernen, der in der Elektrolysekammer produziert wird, wobei der Wasserstoffkanal (107) mit einem Wasserstoffauslasskanal in der Welle (122) verbunden ist, die zu einer Wasserstoffsammelkammer (112) führt, wobei ein Wasserstoffauslassventil angepasst ist, den Druck in dem Wasserstoffgas zu steuern.

7. Vorrichtung nach Anspruch 1, die Vorrichtung weiter aufweisend einen Sauerstoffkanal (108), der angepasst ist, um Sauerstoff zu entfernen, der in der Elektrolysekammer produziert wird, wobei der Sauerstoffkanal (108) verbunden mit einem Sauerstoffauslasskanal in der Welle (122) ist, die zu einer Sauerstoffsammelkammer (113) führt, wobei ein Sauerstoffauslassventil angepasst ist, den Druck in dem Sauerstoffgas zu steuern.

8. Vorrichtung nach Anspruch 1, die Vorrichtung aufweisend eine Pumpe, die geeignet ist, das Wasser oder die Elektrolyte druckfest zu machen, bevor sie zur der Scheibenstruktur transportiert werden.

9. Vorrichtung nach Anspruch 1, wobei die Vorrichtung angepasst ist, in überkritischen Bedingungen in der Elektrolysekammer zu operieren.

10. Vorrichtung nach Anspruch 6, wobei die Vorrichtung angepasst ist, mit einer Spannung zwischen den Elektroden (105, 106) zu arbeiten, die Spannungsbögen zwischen den Elektroden erzeugen.

11. Vorrichtung nach Anspruch 2 oder 3, die Vorrichtung aufweisend mindestens einen Wärmetauscher, der Wärme von den produzierten Gasen auf das Wasser oder die Elektrolyte in dem Einlasskanal überträgt.

12. Vorrichtung nach Anspruch 7, die Vorrichtung aufweisend einen oder mehr Katalysatoren in dem Sauerstoffkanal (108).

13. Vorrichtung nach Anspruch 12, die Vorrichtung aufweisend eine Abfolge von Katalysatoren, die mindestens Nickel, Kupfer und Zink enthalten.

14. Vorrichtung nach Anspruch 1, die Vorrichtung aufweisend eine Vakuumkammer, die die Scheibenstruktur umschließt.

15. Vorrichtung nach Anspruch 3, 6 und 7, wobei der Einlasskanal (104) und/oder Wasserstoffkanal (107) und/oder Sauerstoffkanal (108) als eine Spirale gebildet ist.

16. Vorrichtung nach einem der vorstehenden Ansprüche, die Vorrichtung aufweisend eine Membran, die sich zwischen den Elektroden befindet.

17. Vorrichtung nach Anspruch 16, wobei die Membran aus einem Polymer- oder Keramikmaterial gefertigt ist.

## Revendications

1. Dispositif pour produire de l'hydrogène et de l'oxygène par électrolyse, ledit dispositif comprenant une structure (120) en forme de disque comprenant une chambre d'électrolyse à la périphérie de la structure (120) en forme de disque, une première et une seconde électrode (105, 106) dans ladite chambre d'électrolyse, un moyen pour alimenter en courant électrique continu lesdites électrodes (105, 106), et un moyen d'entraînement pour la mise en rotation de ladite structure (120) en forme de disque, **caractérisé en ce que** lesdites première et seconde électrodes (105, 106) sont parallèles et arrangées en direction tangentielle le long de la périphérie de ladite structure (120) en forme de disque.

2. Dispositif selon la revendication 1, ledit dispositif comprenant en outre un premier canal d'entrée (103) dans un arbre supportant ladite structure en forme de disque, le canal d'entrée (103) étant relié à un canal en forme de disque menant à la chambre d'électrolyse, ledit canal d'entrée (103) alimentant ladite chambre d'électrolyse en eau ou en électrolyte.

3. Dispositif selon la revendication 1, ledit dispositif comprenant en outre un premier canal d'entrée (103) dans un arbre supportant ladite structure en forme de disque, le canal d'entrée (103) étant ramifié en tubes partant d'une partie centrale de la structure en forme de disque jusque dans la chambre d'électrolyse à la périphérie, ledit canal d'entrée (103) alimentant ladite chambre d'électrolyse en eau ou en électrolyte.

4. Dispositif selon la revendication 2 ou 3, dans lequel ledit premier canal d'entrée est conçu pour distribuer l'électrolyte ou l'eau à une périphérie externe des première et seconde électrodes (105, 106).

5. Dispositif selon la revendication 1, ledit dispositif comprenant un second canal d'entrée conçu pour alimenter la chambre d'électrolyse en hydrocarbures ou en autres produits chimiques.

6. Dispositif selon la revendication 1, ledit dispositif comprenant en outre un canal pour l'hydrogène (107) conçu pour extraire l'hydrogène produit dans la chambre d'électrolyse, le canal pour l'hydrogène (107) étant relié à un canal de sortie de l'hydrogène dans l'arbre (122), menant à une chambre de récolte de l'hydrogène (112), une soupape de sortie de l'hydrogène étant conçue pour régler la pression dans l'hydrogène gazeux.

7. Dispositif selon la revendication 1, ledit dispositif comprenant en outre un canal pour l'oxygène (108) conçu pour extraire l'oxygène produit dans la chambre d'électrolyse, le canal pour l'oxygène (108) étant relié à un canal de sortie de l'oxygène dans l'arbre (122), menant à une chambre de récolte de l'oxygène (113), une soupape de sortie de l'oxygène étant conçue pour régler la pression dans l'oxygène gazeux.

8. Dispositif selon la revendication 1, ledit dispositif comprenant une pompe conçue pour la mise sous pression de l'eau ou de l'électrolyte avant leur alimentation à la structure en forme de disque.

9. Dispositif selon la revendication 1, ledit dispositif étant conçu pour fonctionner avec des conditions supercritiques dans ladite chambre d'électrolyse.

10. Dispositif selon la revendication 6, ledit dispositif étant conçu pour fonctionner avec une tension entre les électrodes (105, 106) produisant un arc électrique entre lesdites électrodes.

11. Dispositif selon la revendication 2 ou 3, ledit dispositif comprenant au moins un échangeur de chaleur transférant de la chaleur des gaz produits à l'eau ou à l'électrolyte dans le canal d'entrée.

12. Dispositif selon la revendication 7, ledit dispositif comprenant un ou plusieurs catalyseurs dans le canal pour l'oxygène (108).

13. Dispositif selon la revendication 12, ledit dispositif comprenant une succession de catalyseurs, contenant au moins du nickel, du cuivre et du zinc.

14. Dispositif selon la revendication 1, ledit dispositif comprenant une chambre dans laquelle règne le vide, renfermant ladite structure en forme de disque.

15. Dispositif selon les revendications 3, 6 et 7, dans lequel ledit canal d'entrée (104) et/ou ledit canal pour l'hydrogène (107) et/ou ledit canal pour l'oxygène (108) est/sont réalisé(s) en forme d'une spirale.

16. Dispositif selon l'une quelconque des revendications précédentes, ledit dispositif comprenant une membrane disposée entre les électrodes.

17. Dispositif selon la revendication 16, dans lequel ladite membrane est réalisée en une matière polymère ou céramique.
